Europäisches Patentamt

European Patent Office

Office européen des brevets

(11) Publication number: 0 089 822
B1

(12) EUROPEAN PATENT SPECIFICATION

(45) Date of publication of patent specification: 04.12.85

(51) Int. Cl.⁴: **G 03 B 3/10**, G 02 B 7/11

(21) Application number: 83301507.6

(22) Date of filing: 18.03.83

(54) Focus state detecting device.

(30) Priority: 23.03.82 JP 46084/82
23.03.82 JP 46085/82

(43) Date of publication of application:
28.09.83 Bulletin 83/39

(45) Publication of the grant of the patent:
04.12.85 Bulletin 85/49

(84) Designated Contracting States:
AT BE CH DE FR GB IT LI NL SE

(56) References cited:
EP-A-0 010 241

(73) Proprietor: **OLYMPUS OPTICAL CO., LTD.**
**43-2, 2-chome, Hatagaya Shibuya-ku**
**Tokyo 151 (JP)**

(72) Inventor: **Shishido, Yoshio**
**No. 2-2-30-512, Fuchinobe**
**Sagamihara-shi Kanagawa-ken (JP)**
Inventor: **Nishigaki, Shinichi**
**No. 8-13-2, Seijyo Setagaya-ku**
**Tokyo (JP)**
Inventor: **Kato, Shinichi**
**No. 2 Olympus Oowada ryo 7-14-11**
**Oowadamachi Hachioji-shi Tokyo (JP)**
Inventor: **Matsuo, Kazumasa**
**No. 3-1-7-304 Ochiai Tama-shi**
**Tokyo (JP)**
Inventor: **Miyazaki, Atsushi**
**No. 3 Olympus Oowada ryo 5-19-10**
**Oowadamachi**
**Hachioji-shi Tokyo (JP)**
Inventor: **Takahashi, Susumu**
**Olympus Oowada ryo 4-22-13, Oowadacho**
**Hachioji-shi, Tokyo (JP)**
Inventor: **Nakamura, Takeaki**
**No. 6-9-8 Asahigaoka Hino-shi**
**Tokyo (JP)**
Inventor: **Ishikawa, Akibumi**
**No. 4425 Kamiongatamachi**
**Hachioji-shi Tokyo (JP)**

Courier. Press, Leamington Spa, England.

**0 089 822**

(74) Representative: **Kennedy, Victor Kenneth et al**
**G.F. REDFERN & CO. Marlborough Lodge 14**
**Farncombe Road**
**Worthing West Sussex BN11 2BT (GB)**

## Description

This invention relates to focus state detecting devices for use in optical systems as an aid to determining the state of focus.

Generally, in optical observing and photographic devices, such as endoscopes, cameras and television cameras, focus state detecting means are often provided, to determine whether the image forming position of the photographic or image forming optical system of the device is correctly focused to provide a clearly formed image at a surface such as a film surface, so that the object may be clearly observed or photographed at any object distance.

In known focus state detecting devices, if an object to be photographed is dark, or if a dark-ground optical system is to be used, the detector output from the light receiving element may be so small that focus state detection is virtually impossible.

A means for projecting a beam of a fixed shape toward an object to be photographed is described in the gazette of Japanese patent laid open No. 19810/1974. However, this uses an optical system in which the projecting means is independent of the photographic lens system, and cannot therefore be applied to an endoscope or the like, in which there is only one light path available in the optical system.

Means using split prisms are disclosed in the gazette of Japanese patent laid open No. 128923/1981, but in this case there are problems if precision above a given level is required, because many light receiving elements will be required, and the circuit system for detecting whether the focus state is correct or not by comparing their output signals will be complicated, and particularly where the production run is small, the cost will be high.

A focus state detecting device wherein a light source is periodically interrupted to project light onto an object to be photographed, the output signals obtained during the extinguished periods being deducted from the output signals obtained when light is passed, in order to reduce the influence of external lights other than the light source, so that the focus state may be detected even if the object to be viewed or photographed is dark, or the optical system has a narrow aperture. This is described in the gazette of Japanese patent laid open No. 125713/1981. As two positions conjugate with a predetermined image forming surface such as a film surface are provided on both sides of the image forming surface, so that the light projected onto the object by the light projecting means arranged in one position may be received by the light receiving means arranged in the other position in this prior art example, there have been problems due to the fact that comparatively large spaces are required for the light projecting means and light receiving means, the formations of the focusing detecting optical system and circuit system are complicated and therefore the cost is high.

One object of the present invention is to provide a novel photosensor having an improved signal-to-noise ratio to facilitate focus state detection with high precision in a simple structure of low cost.

In accordance with the invention there is provided a focus state detecting device for use in an optical system wherein means are provided to image a light spot onto an object that is to be viewed or photographed through an image-forming lens, in which a photo-electric transducer is provided to detect the light reflected back from the object to enable the state of focusing to be determined, characterised in that a through-hole is formed in the light receiving surface of said photo-electric transducer, that said means are provided to image said light onto said object via said through-hole, and that light intercepting means are provided to prevent light leaking directly outward to the light receiving surface of said transducer.

The invention will now be described with reference to the drawings in which:—

Figure 1 is an explanatory simplified view showing a method of detecting focusing using a first exemplary embodiment of the invention;

Figure 2 is a graph showing the output characteristics of the photosensor for different positions of the lens shown in Figure 1;

Figure 3 is an explanatory view showing details of a second exemplary embodiment of the present invention in use;

Figure 4 is an explanatory view showing a third exemplary embodiment of the present invention in use;

Figure 5 is an explanatory view showing a fourth exemplary embodiment of the present invention in use;

Figure 6 is an explanatory view showing a fifth exemplary embodiment of the present invention in use; and

Figure 7 is an explanatory view showing a sixth exemplary embodiment of the present invention in use.

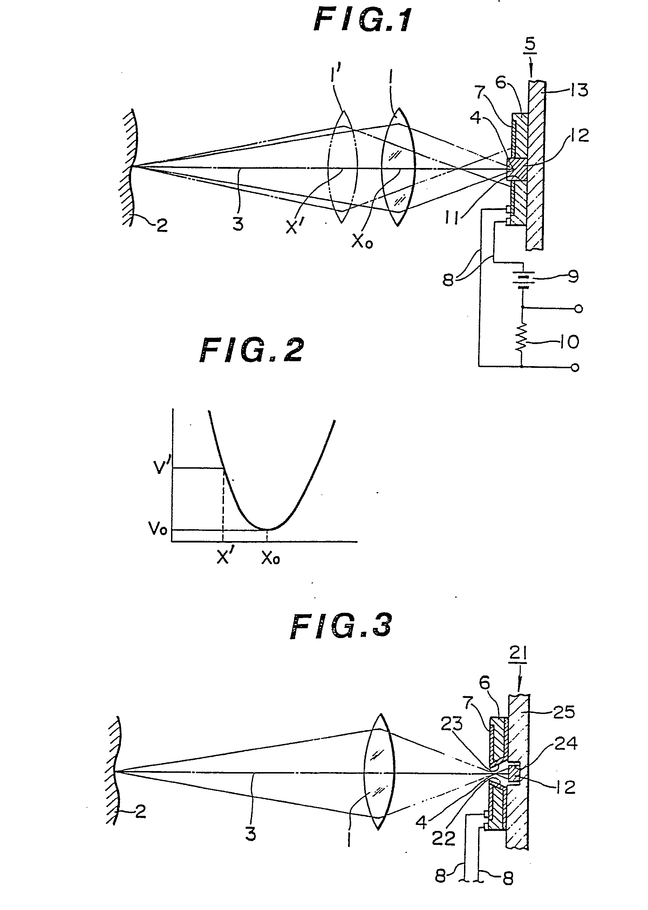

As shown in Figure 1, a photographic or image forming objective lens 1 is provided to form an image of an object 2 at a predetermined position on a surface such as a film, and a first exemplary embodiment of a novel photosensor 5 is arranged in a position 4 on an optical axis 3 conjugate with the predetermined image-forming surface.

The photosensor 5 consists of a thin P-type semiconductor layer 7 formed on a plate-shaped N-type semiconductor body 6. A series circuit containing a battery 9 and resistance 10 is connected via leads 8 to the layer and body across the PN junction, the P-type semiconductor layer 7 being biased in the reverse direction by the battery 9 to be negative relative to the body, so that when light is incident upon the PN junction an electric current will flow through the PN junction in response to the light level and the state of focus can be detected by measuring the voltage across the resistance 10 (or by measuring the current itself flowing through the resistance 10).

3

A through-hole 11 is formed in the centre of the PN junction surface, and a light emitting member 12 such as a LED for projecting light onto the object 2 to detect the state of focus is fitted in this through-hole 11.

The front face of the light emitting diode 12 is formed to be flush with or to project from the front face of the light receiving transducer surface, and the outer longitudinal surface of the light emitting diode 12 is provided with an insulating light-intercepting member so that light emitted from the light emitting diode 12 can not leak directly on to the light receiving transducer surface.

The N-type semiconductor body 6 with the light emitting diode 12 embedded in the through-hole 11, is fitted by its back surface to a base plate 13, which also intercepts light. If the N-type semiconductor body 6 is relatively thick, the base plate 13 can be omitted, and a light intercepting film painted on to the rear of the body 6 and diode 12.

The method of detecting the state of focus of an optical system using this first exemplary embodiment of the photosensor 5 is as follows.

In an optical system having an optical axis 3 the light receiving surface is set in the position 4 conjugate with a predetermined image forming surface such as a film surface on the optical axis 3 to the rear of the lens 1, and the light emitting diode 12 is positioned on the optical axis 3, so that when electric power is fed via leads or the like (not illustrated) a light will be emitted by the light emitting diode 12 and will be projected as a spot onto the object 2 through the lens 1 from the front face of the light emitting diode 12.

A part of the light projected onto the object 2 will be reflected by the object 2 and return to the photosensor 5 through the lens 1. In this case, if the lens 1 is in a correct focus state, at the illustrated position $X_0$ for the object 2 in its indicated position, the projected light will form a spot illuminating the front of the object 2 on the optical axis 3, and the image forming position of the reflected light will be at the position 4, conjugate with the predetermined image forming surface, as indicated by fine solid lines. Therefore light will not reach the light receiving surface formed by the PN junction of the transducer, and no significant current will flow between the P-type semiconductor 7 and N-type semi-conductor body 6 of the photosensor 5, and there will only be a dark current component giving a voltage $V_0$ across the resistance 10, of a minimum value, close to zero, as shown in Figure 2.

On the other hand, if the lens 1 is in the position 'X', corresponding to the state called "rear focusing", in which the lens 1 is displaced forward to the left as drawn from the correct focus position $X_0$, as indicated by a broken-line drawn lens 1', and light reflected by the object 2 will already be converging to a position on the axis forward of the light receiving surface, and will then expand and a divergent beam of light will reach the light receiving transducer surface, as indicated by chain-dotted lines, so that a photoelectric output current corresponding to the light level and surface extent of the incident light will flow between the P-type semiconductor layer 7 and the N-type semiconductor body 6 of the photosensor 5.

Therefore, as shown in Figure 2, the resultant output voltage V' will be far larger than in the case of the correct focus position $X_0$.

Contrary to the above, in the corresponding state called "front focusing", in which the lens 1 is displaced to the rear from the correct focused position, the reflected light will still be converging to a point to the rear of the light receiving surface, so that in this case, too, light will be incident on the light receiving transducer surface and a photoelectric current corresponding to the light level and surface area will flow.

Therefore, when in the correct focused position $X_0$ as shown in Figure 2, the output voltage $V_0$ of the photosensor 5 will be at a minimum value, due to be so-called dark current. In a state displaced from this focused state, a current larger than the dark current will flow, depending on the light level and the area of the light receiving surface that is illuminated. Even in a state displaced slightly forward or rearward from the correct focused state, an output voltage that is far larger than the output voltage $V_0$ obtained when in the correct focused state, will be formed across the resistance 10.

Thus, as the LED front face projects light from the one or more bright points of the light emitting diode 12, and this face is flush with or projects forward of the front surface of the light receiving transducer surface, and as the light emitting diode 12 is surrounded by a light intercepting member, there is a positive elimination of any radial leakage directly from the light source to the light receiving transducer surface, thus preventing such leakage increasing the dark current component and making it difficult to detect whether the image is correctly focused or not. The signal-to-noise ratio can be kept large, and therefore the state of focusing can be detected with high precision. By the way, if the light emitting diode 12 is covered on its periphery by a light intercepting member, it is not essential to design the diode such that the bright point or points ‘selectively project light forward through the front face.

Figure 3 shows a second exemplary embodiment, a photosensor 21 having a P-type semiconductor layer 7 formed on an N-type semiconductor plate 6, with a through-hole 22 in the centre of the PN junction expanding rearwardly through the N-type semiconductor plate 6. This hole is formed by etching from the rear of the N-type semiconductor plate 6 for example. The peripheral surface of this through-hole 22 may be painted to form an insulating film (not illustrated) to prevent the PN junction surface from being short-circuited, or the layer 7 may be formed with a larger central aperture than the through-hole 22, so that the exposed peripheral surface of the through-hole 22 only consists of the N-type semiconductor plate 6, and a light intercepting film 23 is then formed by vapour deposition of a metal on the peripheral surface of the through-hole 22 and on the back surface of the N-type semiconductor plate 6.

The N-type semiconductor plate 6 is mounted by its back surface, provided with the light intercepting film 23, on a light intercepting base plate 25 having a recess 24 formed in a position facing the through-hole 22.

A light-emitting diode 12 or the like is contained as a light source in the recess 24.

This forms of photosensor 21 is characterised by the fact that the light emitting diode 12 is contained in the recess in the base plate to which the transducer element with its through-hole 22 is fitted, and the light intercepting film 23 formed by vapour deposition of a metal is so formed as to cover the peripheral surface of the through-hole 22, so that when light from the light-emitting diode 12 is projected onto the object 2 light can not leak directly radially outwards to the light-receiving transducer from the light-emitting diode 12 and the dark current component will not be increased.

The method of detecting correct focusing by using this second exemplary embodiment of a photosensor is substantially the same as that described above for the first embodiment, and the focusing state can be detected with high precision in the same manner as described for the first embodiment.

In this second exemplary embodiment, the through-hole 22 is formed with a smaller diameter at the front surface than at the rear, in order to detect the state of focus with a higher precision than is possible with the first described embodiment. However, an embodiment in which the diameter of the through-hole is constant, using an assembly as shown in Figure 3, would also be within the scope of the present invention.

The light-intercepting film 23 in the second exemplary embodiment may be made by applying a coat of light-intercepting paint instead of vapour deposition of a metal. Even if the junction between the P-type semiconductor layer 7 and the N-type semiconductor plate 6 is exposed at the through-hole 22, an electrically-insulating paint can be directly applied.

In the second exemplary embodiment, the light-emitting diode 12 does not have to be constructed as shown in Figure 3, but can be arranged to project partly into the through-hole 22, or even to extend beyond the through-hole 22.

In the first and second exemplary embodiments, the through-holes 11 and 22 may be of circular, square or slit-shaped cross-section.

When used to detect whether an image is correctly focused or not by projecting light from the light-emitting diode 12 onto the object 2, a light-emitting diode producing visible radiation may be used, or a light-emitting diode producing light in an infrared region outside the visible range may be used, in which case the influence of external light causing an increased dark current can be reduced advantageously, by using a transducer with a selected sensitivity range, i.e. the photosensors 5 or 21 need to be of high sensitivity to the selected light wave-length.

Further, in the first and second exemplary embodiments, the light-receiving transducer surface is formed by the PN junction. However, other photo-electric transducer devices can be used, such as a resistance element whose value depends on the incident light level, or a photo-transistor having an amplifying action, or photo-cells of CdS or CdSe can be employed.

If the light source is made to emit a pulsed light, using an alternating current connection to cause light to be emitted in the form of pulses at a specific frequency, and only signals of this frequency are selected from the output of the light receiving transducer, the adverse influence of external light can be further reduced.

The first and second exemplary embodiments offer advantages in that as the light-emitting member which may be used for detecting the state of focusing of an optical system is arranged in or behind the hole formed in the light-receiving transducer surface, and the light-intercepting means is formed on the periphery of the hole, the bright point or points of the light-emitting member may be flush with, or project forward, or be disposed behind the light-receiving transducer surface and in any case light from the light-emitting member will be prevented from leaking radially out directly to the light-receiving transducer surface, so that the dark current component will be reduced and the focusing state can be detected with high precision, although the photosensor has a simple structure and can be made at a low cost, being small in size and light in weight.

Therefore, a photosensor constructed in accordance with the present invention can be contained or fitted into a small space without substantially increasing the weight, which is an important or essential requirement in many optical instruments, and will assist in clearly forming an image on a predetermined image forming surface, and thus can be used in many fields.

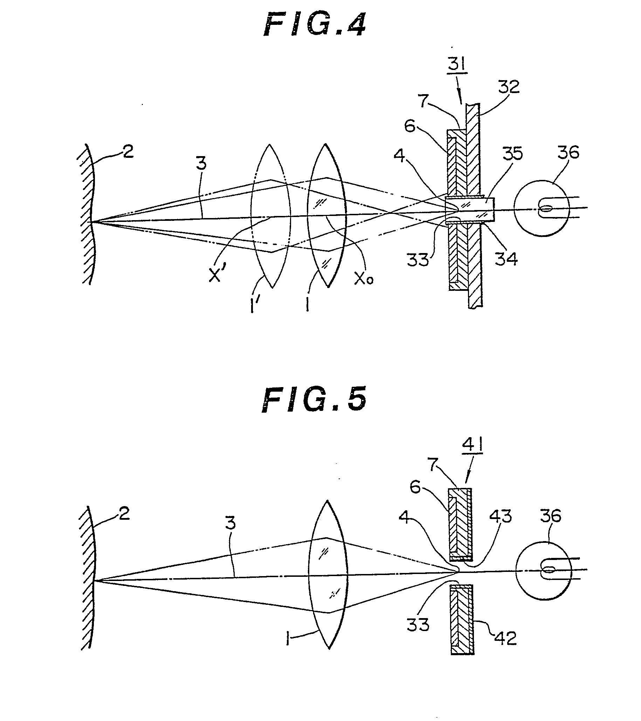

A third exemplary embodiment, a photosensor 31, is shown in Figure 4, where a front surface is an N-type semiconductor layer 6, and forms a PN junction with a P-type semiconductor plate 7 which contacts the back surface and the periphery of the N-type semiconductor layer 6 to form a light-receiving surface, and cause electric current to flow through the junction in response to incident light. The P-type semiconductor plate 7 is fitted to a light-intercepting base plate 32 of a metal or the like, using a bonding agent.

A thin, light-intercepting pipe 34, for example not more than 0.1 mm thick, is fitted in a through-hole 33 passing through the centre of the PN junction and through the base plate 32, and a transparent glass bar 35 is fitted in it so that it prevents light from leaking radially out to the light-receiving surface via the side of the through-hole 33.

If the junction between the N-type semiconductor layer 6 and the P-type semiconductor plate 7 is exposed at the side of the through-hole 33, the pipe 34 will be formed of an electrically insulating material to avoid short-circuiting the PN junction, or a conductive member may be used, if painted or coated externally with an insulating material. On the other hand, if only the P-type semiconductor layer 7 (or the N-type semiconductor layer 6) is present at the exposed side of the through-hole 33, a conductive pipe 7 can be used, as in the other embodiments described.

If the thus formed photosensor 31 is to be used in an optical system to detect the state of focus, the centre axis of the glass bar 35 will be positioned on the optical axis 3 of the optical system, PN junction surface will be arranged on the optical axis 3 in the position 4 conjugate with the image forming surface, and a light source 36 projecting a light onto the object 2 to detect the focusing state will be arranged on the optical axis 3 to the rear of the glass bar 35.

The thus formed third embodiment has the same functions and advantages as the first and second embodiments.

In the third embodiment, as the light-intercepting pipe 34 is fitted to cover the peripheral surface of the through-hole 33 and ensure that no light escapes radially, light from the light source 36 is positively prevented from being incident directly upon the PN junction surface before being projected to the object 2, and therefore the photosensor performance will be greatly improved in comparison with one in which the pipe 34 is not provided.

In the third embodiment, even if the bar 35, of glass or another transparent material is not provided, the function will be virtually the same. The N-type semiconductor layer 6 and P-type semiconductor plate 7 may be interchanged in position, in which case they should be biased with an opposite polarity to that described above.

Figure 5 shows a fourth exemplary embodiment a photosensor 41 constructed in a similar manner to the third embodiment, with a light receiving surface formed by bonding a P-type semiconductor plate 7 to an N-type semiconductor layer 6 so as to cover the back surface and periphery of the N-type semiconductor layer 6, having a through-hole 33 formed in the central part.

In this embodiment, the back surface of the P-type semiconductor plate 7 and the side wall of the through-hole 33 are coated with respective metal films, 42 and 43, made by vapour deposition of a light-intercepting metal, so as to block the passage of any light from a light source 36 from directly reaching the light-receiving surface through the P-type semiconductor 7, and from leaking radially to the light-receiving surface through the side of the through-hole 33. Those surfaces may be painted with a substance intercepting the light, such as a paint, instead of using metal films, 42 and 43. In this embodiment, as opposed to the case shown in Figure 4, only the P-type semiconductor layer 7 is exposed to the periphery of the through-hole 33.

The functional operation of this fourth embodiment is substantially the same as that of the above described third embodiment.

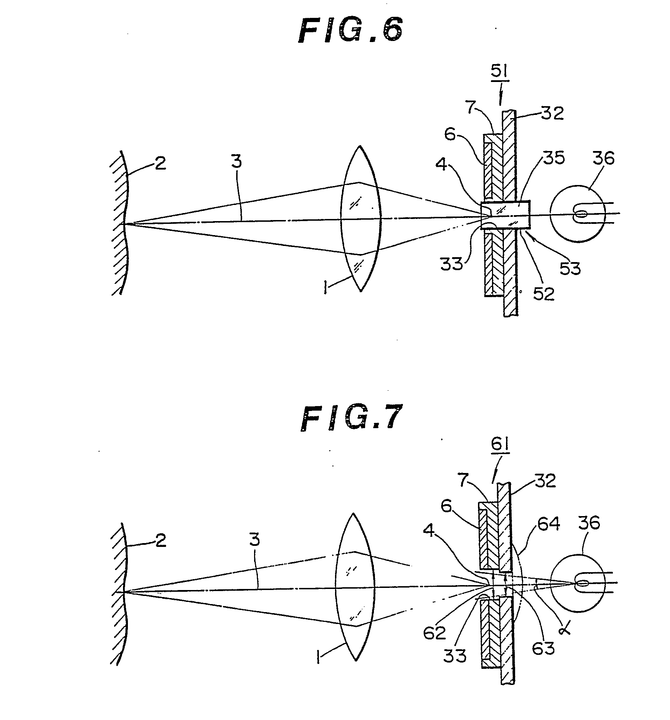

In Figure 6, a fifth exemplary embodiment is shown, a photosensor 51 that is formed by fitting a glass bar 53 coated on the side surface by vapour-deposition with a metal film 52, which replaces the thin pipe 34 of the third embodiment shown in Figure 4, bearing in mind that only the P-type semiconductor layer 7 is exposed to the peripheral side surface of the through-hole 33.

Also, in this case, light from the light source 36 is prevented by the deposited metal film 52 from leaking radially directly to the light-receiving surface.

In this fifth embodiment, the transparent bar or rod 35 may be formed of a substance of high refractive index, without providing a deposited metal film 52, if the bar or rod is surrounded by a layer of low refractive index material so that any light projected onto the object 2 through the bar 35 from the light source 36 will be prevented from leaking radially to the light-receiving surface through the side wall of the bar 35.

The function of the fifth embodiment is the same as that of the third embodiment.

Figure 7 shows a sixth exemplary embodiment, a photosensor 61 with a PN junction formed between a layer 6 and a plate 7, and having a through-hole 33 of diameter 62, the plate 7 being mounted on a light-intercepting base plate 32 provided with a hole communicating with the through-hole 33 but having a diameter 63 smaller than that 62 of the through-hole 33, so that in an angle α of the light beam projected onto the object 2 through the through-hole 33 from the light source 36 the internal edge part of the base plate 32 projecting inwardly of the through-hole 33 ensures that light may not leak radially outward to the light-receiving surface via the outer periphery of the through-hole 33 of diameter 62. Although reference is made to relative diameters, it will be understood that the holes are not necessarily circular in cross-section.

In the above mentioned case, if a condenser lens 64 is arranged on the back surface of the light-intercepting base plate 32, a parallel light beam will be formed from the light source 36 and the inwardly projecting part of the base plate can be reduced.

The function of the sixth embodiment is the same as that of the third described embodiment.

In the above described, respective embodiments, if light is projected onto the object 2 through the through-hole 33 formed in the light-receiving surface, light from the light source 36 will be prevented from leaking radially directly to the light-receiving surface by the pipe 34, metal film 43, metal film 52 or the like, as described above, and in the event of a correct focused state, or a state sufficiently close to have the light convergent at or near the position 4 conjugate with the predetermined image forming surface, and expanding rearwardly from the position 4, this light will also be prevented from leaking radially to the light-receiving surface through the side of the through-hole 33.

The leakage in the latter may be negligible in some cases, but if it is found necessary to prevent such leakage, then in the sixth embodiment shown in Figure 7, a light intercepting pipe such as is described above may be fitted on the side wall of the through-hole 33, a vapour deposited film may be formed, or a rearwardly expanding through-hole may be formed.

In the respective embodiments described above, the shape of the through-hole 33 is not limited to a circle, but may be square or a slit-shaped, and may be closed by a transparent window.

The light may be of visible wavelengths as from a lamp or LED, or light having a wavelength in an infrared range may be used for the light source 36, to be used to detect the focusing state.

The light-receiving surface in the above described third to sixth embodiments is formed by a PN junction diode, but a phototransistor structure having an amplifying action may be used, or a photo-cell of CdS or CdSe, having a resistance value depending on the incident light level.

## Claims

1. A focus state detecting device for use in an optical system wherein means (1) are provided to image a light spot onto an object (2) that is to be viewed or photographed through an image-forming lens, in which a photo-electric transducer (5) is provided to detect the light reflected back from the object (2) to enable the state of focusing to be determined, characterised in that a through-hole is formed in the light receiving surface of said photo-electric transducer (5), that said means (1) are provided to image said light onto said object (2) via said through hole, and that light intercepting means (13; 23; 25; 32, 34, 35; 42, 43; 52) are provided to prevent light leaking directly outward to the light receiving surface of said transducer (5).

2. A device as claimed in Claim 1, in which said light intercepting means is a non-transparent film (23) formed on the side wall of the through-hole.

3. A device as claimed in Claim 1, in which said light intercepting means is a non-transparent pipe (34) fitted in the through-hole.

4. A device as claimed in Claim 1, in which said light intercepting means is a layer having a refractive index lower than the refractive index of a transparent member that is fitted in the through-hole, said layer being arranged on the side surface of the transparent member.

5. A device as claimed in Claim 1, in which said light intercepting means is formed by the provision of a hole in a light intercepting plate provided on the back of the light receiving surface, communicating with said through-hole, but smaller in cross-section.

6. A device as claimed in Claim 1, in which said light intercepting means is a peripheral covering on a light emitting means inserted in the through-hole.

## Patentansprüche

1. Eine Vorrichtung zum Feststellen des Fokussierungszustands für den Gebrauch in einem optischen System, worin Mittel (1) vorgesehen sind, um einen Leuchtfleck auf einem Objekt (2) abzubilden, das betrachtet oder photographiert wird durch eine abbildformende Linse, und worin ein photoelektrischer Energieumwandler (5) vorgesehen ist, um das Licht aufzunehmen, das von dem Objekt (2) reflektiert wird, damit der Fokussierungszustand bestimmt werden kann, dadurch gekennzeichnet, dass ein Durchgangsloch in der lichtempfangenden Oberfläche des genannten photoelektrischen Energieumwandlers (5) gebildet wird, dass die genannten Mittel (1) vorgesehen sind, um das Licht auf das genannte Objekt (2) durch das genannte Durchgangsloch zu werfen, und dass Lichtauffangmittel (13; 23, 25; 32, 34, 35; 42, 43; 52) vorgesehen sind, um zu verhindern, dass Licht direkt nach ausserhalb der lichtempfangenden Oberfläche des genannten Energieumwandlers abweicht.

2. Eine Vorrichtung gemäss Anspruch 1, worin die genannten Lichtauffangmittel ein undurchsichtiger Film (23) sind, der auf der Seitenwand des Durchgangslochs ausgebildet ist.

3. Eine Vorrichtung gemäss Anspruch 1, worin die genannten Lichtauffangmittel ein undurchsichtiges Rohr (34) sind, das in das Durchgangsloch eingepasst ist.

4. Eine Vorrichtung gemäss Anspruch 1, worin die genannten Lichtauffangmittel eine Schicht sind, die einen Brechungsindex hat, der niedriger ist als der Brechungsindex eines durchsichtigen Teils, der in das Durchgangsloch eingepasst ist, wobei die genannte Schicht auf der Seitenfläche des durchsichtigen Teils aufgebracht ist.

5. Eine Vorrichtung gemäss Anspruch 1, worin die Lichtauffangmittel durch die Bildung eines Lochs in einer Lichtauffangplatte geformt werden, die auf der Rückseite der lichtempfangenden Oberfläche vorgesehen ist, welches Loch mit dem genannten Durchgangsloch in Verbindung steht, aber einen kleineren Durchmesser hat.

6. Eine Vorrichtung gemäss Anspruch 1, worin die genannten Lichtauffangmittel eine Oberflächenabdeckung auf einer Lichtquelle sind, die in das Durchgangsloch eingesetzt ist.

## Revendications

1. Dispositif de détection d'état de mise au point destiné à être utilisé dans un système optique dans lequel des moyens (1) sont prévus pour projeter un faisceau concentré de lumière sur un objet (2) devant être vu ou photographié au travers d'une lentille de formation d'image, dans lequel un transducteur photoélectrique (5) est prévu pour détecter la lumière réfléchie depuis l'objet (2) pour permettre de déterminer l'état de mise au point, caractérisé par le fait qu'un trou traversant est formé dans la surface de réception d'image dudit transducteur photoélectrique (5), que lesdits moyens (1) sont prévus pour projeter ladite lumière sur ledit objet (2) à travers ledit trou, et qu'un moyen d'interception de lumière (13, 23, 25, 32, 34, 35, 42, 43, 52) est prévu pour empêcher la lumière de s'échapper directement vers l'extérieur à la surface de réception de lumière dudit transducteur (5).

2. Dispositif selon la revendication 1, dans lequel ledit moyen d'interception de lumière est une pellicule non transparente (23) formée sur la paroi latérale du trou traversant.

3. Dispositif selon la revendication 1, dans lequel ledit moyen d'interception de lumière est un tuyau non transparent (34) monté dans le trou traversant.

4. Dispositif selon la revendication 1, dans lequel ledit moyen d'interception de lumière est -une couche possédant un indice de réfraction inférieur à l'indice de réfraction d'un élément transparent monté dans le trou traversant, ladite couche étant disposée sur la surface latérale de l'élément transparent.

5. Dispositif selon la revendication 1, dans lequel ledit moyen d'interception de lumière est formé en réalisant un trou dans une plaque d'interception de lumière mise en place à l'arrière de la surface de réception de lumière, communiquant avec ledit trou traversant mais de section inférieure.

6. Dispositif selon la revendication 1, dans lequel ledit moyen d'interception de lumière est une couverture périphérique sur un moyen d'émission de lumière inséré dans le trou traversant.

# FIG.1

# FIG.2

# FIG.3

# FIG.4

# FIG.5

0 089 822

FIG.6

FIG.7

3